# EUROPÄISCHE PATENTSCHRIFT

(11) **EP 1 285 439 B1**
(45) Veröffentlichungstag und Bekanntmachung des Hinweises auf die Patenterteilung: **26.11.2003**
(21) Anmeldenummer: 01943063.6
(22) Anmeldetag: 11.05.2001
(51) Int. Cl.: G11B 7/085

(54) **GESTALTUNG DER FÜHRUNG EINER OPTISCHEN ABTASTVORRICHTUNG**
EMBODIMENT FOR THE CONTROL OF AN OPTICAL READING DEVICE
GUIDAGE D'UN DISPOSITIF DE BALAYAGE OPTIQUE

(30) Priorität: 13.05.2000 DE 10023581
(43) Veröffentlichungstag der Anmeldung: 26.02.2003
(73) Patentinhaber: ROBERT BOSCH GMBH, 70442 Stuttgart (DE)
(72) Erfinder: HERMANNS, Ingo, 31134 Hildesheim (DE)
(86) Internationale Anmeldenummer: DE0101794
(87) Internationale Veröffentlichungsnummer: WO01088909

(56) Entgegenhaltungen:
- DE-C- 201 925
- GB-A- 2 217 094
- US-A- 5 682 282
- US-A- 5 995 479
- PATENT ABSTRACTS OF JAPAN vol. 009, no. 246 (P-393), 3. Oktober 1985 (1985-10-03) & JP 60 098564 A (ZENERARU:KK), 1. Juni 1985 (1985-06-01)
- PATENT ABSTRACTS OF JAPAN vol. 007, no. 278 (P-242), 10. Dezember 1983 (1983-12-10) & JP 58 155576 A (MATSUSHITA DENKI SANGYO KK), 16. September 1983 (1983-09-16)

## Beschreibung

### STAND DER TECHNIK

Die vorliegende Erfindung betrifft eine optische Abtastvorrichtung zum Lesen von auf einem rotierenden Aufzeichnungsträger gespeicherten Daten, insbesondere eine Abtastvorrichtung mit einem Abtastkopf, mindestens einer Führungseinrichtung zum Führen des Abtastkopfes entlang einer vorbestimmten Bahn und mindestens einer mit dem Abtastkopf verbundenen Lagereinrichtung zum Lagern der mindestens einen Führungseinrichtung.

Zum Lesen von auf einem rotierenden Aufzeichnungsträger gespeicherten Daten wird ein optischer Abtastkopf einer Abtastvorrichtung entlang einer Datenspur geführt.

Es wird von dem Abtastkopf über ein auf dem Abtastkopf angebrachtes Objektiv ein Lichtstrahl auf den rotierenden Aufzeichnungsträger zum Erfassen der aufgebrachten Informationen gerichtet, wobei die auf dem Aufzeichnungsträger aufgebrachten Datenspuren abgetastet werden. Zur Vermeidung von Datenlesefehlern ist dabei besonders wichtig, daß der Lichtstrahl immer exakt entlang den Datenspuren geführt und auf den Aufzeichnungsträger fokussiert wird.

Das insbesondere in ein Kraftfahrzeug eingebaute Gehäuse z.B. eines Compact-Disc(CD)-Laufwerks -ist verschiedenen Erschütterungen ausgesetzt. Wird das Abspielgerät durch Vibrationen erschüttert, wirken Trägheitskräfte auf die Abtastvorrichtung. Hierbei treten Positionsänderungen des Laserstrahls bezüglich der Datenspur auf, da sich alle vorhandenen Bauteile aufgrund der Trägheitskräfte gegeneinander zu bewegen versuchen. Da die Funktion des Gerätes aber auf eine permanente exakte Positionierung des Abtastkopfes in Relation zum Aufzeichnungsträger angewiesen ist, besteht für diesen Fall die Gefahr einer Funktions- bzw. Datenleseunterbrechung.

Die Anforderungen an die Positionsgenauigkeit entsprechen in etwa der geometrischen Breite der Datenspuren. Dies entspricht bei einer Compact-Disc ungefähr 1,6 µm und bei einer Digitalen-Video-Disc (DVD) ungefähr 0,740 µm.

Der optische Abtastkopf wird unter dem Aufzeichnungträger auf einer radialen Bahn bewegt. Entscheidend für die Vibrationsperformance ist hierbei die Qualität der Linearführung des optischen Abtastkopfes auf dieser radialen Bahn. Im stationären Betrieb werden Unregelmäßigkeiten der Führung durch eine Verstellung der Optik ausgeglichen. Zum Ausgleich sich langsam verändernder Abweichungen ist eine elektronische Regeleinrichtung der Optikverstellung ausreichend in der Lage.

In dem Dokument DE 196 42 343 A1 ist ein Verfahren beschrieben, das zum Regeln der Fokussierung eines zum Lesen von Daten auf einem rotierenden Aufzeichnungsträger gerichteten Lichtstrahls einer Abtastvorrichtung auf den Aufzeichnungsträger und der Führung des Lichtstrahls entlang der Datenspuren des Aufzeichnungsträgers durch jeweils einen Regelkreis dient. Dabei sind jedoch nur translatorische Bewegungen der Abtastvorrichtung korrigierbar, die aufgrund von Vibrationen in einem unteren Frequenzbereich bis etwa 100-200 Hz verursacht werden. Vibrationen in einem Frequenzbereich über dieser Grenze können dagegen nicht ausgeglichen werden.

Dokument , US-A-5.682.282 , das den nächstliegendsten Stand der Technik beschreibt und zur Definition der Präambel des unabhängigen Anspruchs 1 benutzt wird, beschreibt eine Führungseinrichtung, wobei eine Vorspanneinrichtung eine statische Vorlast in der Medieneben auf die Lagereinrichtung ausübt.

Durch fertigungstechnisch bedingte Passungstoleranzen der einzelnen Bauteile untereinander treten stoßartige Bewegungen dieser unter Vibration auf. Die in den stoßartigen Bewegungen enthaltenen hochfrequenten Anteile überfordern allerdings die elektronischen Regeleinrichtungen der Optik. Somit kommt es zu einer Störung der Lese-/Schreibfunktion.

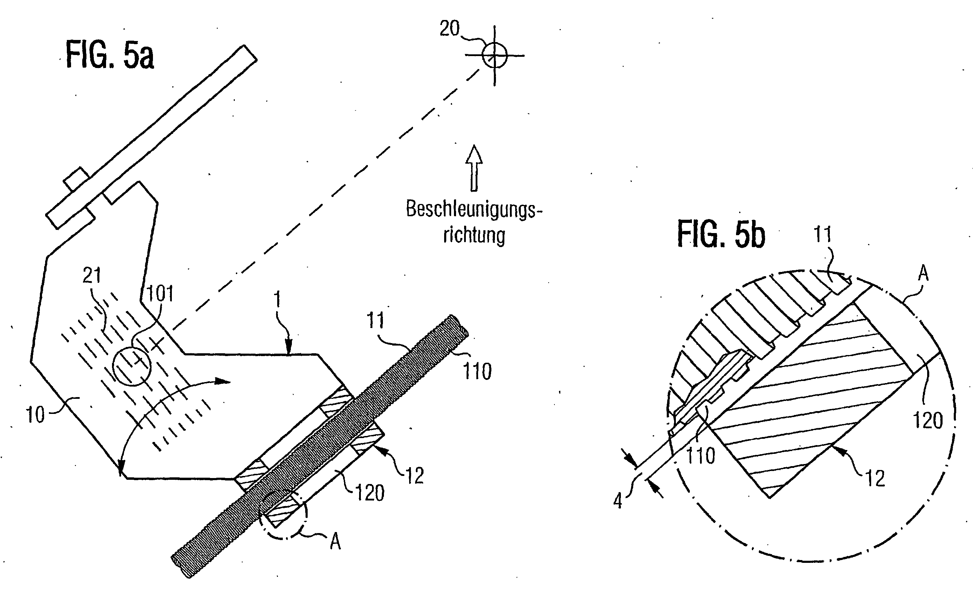

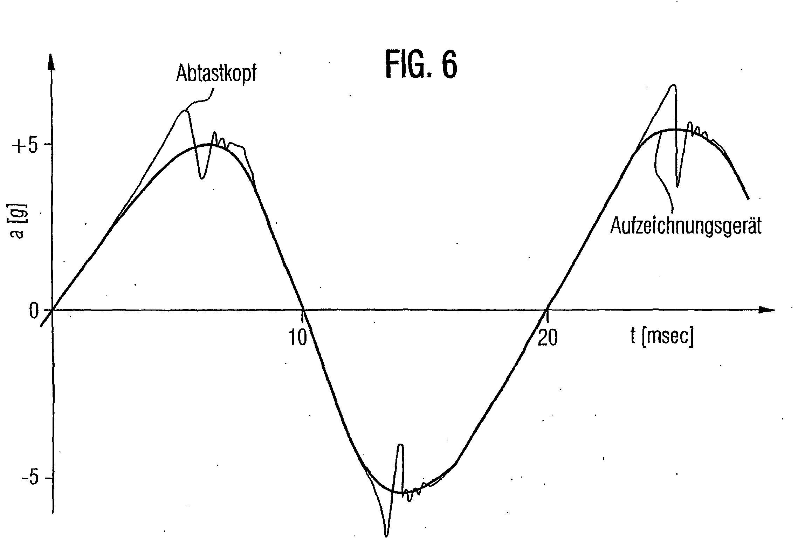

Diese Problematik ist in den Fig. 5a, 5b und 6 dargestellt.

Die Figuren 5a und 5b verdeutlichen das Vorhandensein einer Passungstoleranz 4 zwischen einer Führungseinrichtung 11, die den Abtastkopf 10 entlang einer vorbestimmten Bahn führt, und einer Lagereinrichtung 12 für eine Lagerung der Führungseinrichtung 11.

Der Abtastkopf 10 ist an der anderen Seite aus Kostengründen lediglich durch ein gabelförmiges Führungselement geführt

Zum weiteren Verständnis ist in Fig. 5 der Drehpunkt 20 und ein Ausschnitt der Datenspur 21 des Aufzeichnungsträgers 2 dargestellt.

Fig.6 zeigt ein Diagramm der Schwingungsverläufe des Abtastkopfes und des gesamten Datenaufzeichnungsgerätes bei Beschleunigungsvorgängen im Falle eines Vorhandenseins von . Passungstoleranzen. Es ist eine relative Bewegung zwischen dem Abtastkopf und dem Aufzeichnungsgerät aufgrund der Trägheitskräfte und der Passungstoleranzen deutlich erkennbar.

Die der vorliegenden Erfindung zugrundeliegende Problematik besteht also allgemein darin, die Passungstoleranz zwischen dem Abtastkopf bzw. der an ihm angebrachten Lagereinrichtung und seiner Führungseinrichtung zu eliminieren.

Es wird in der Regel versucht, die Passungstoleranzen der Gleitlager so gering wie möglich zu wählen. In der Praxis sind diesem Verfahren durch Anforderungen hinsichtlich Robustheit (z.B. Empfindlichkeit auf Temperatur- und Feuchteschwankungen, Verschmutzungen), Lebensdauer, Fertigungsmöglichkeiten, -toleranzen und -kosten so enge Grenzen gesetzt, daß eine Relativbewegung des Abtastkopfes selbst bei schwacher Vibration nicht verhindert werden kann.

### VORTEILE DER ERFINDUNG

Die der vorliegenden Erfindung zugrundeliegende Idee besteht darin, daß die optische Abtastvorrichtung mindestens eine elastische Vorspanneinrichtung zum Aufbringen einer statischen Vorspannkraft vorbestimmter Größe und Richtung auf die Führungseinrichtung zum Verspannen derselben und der mit dem Abtastkopf verbundenen Lagereinrichtung gegeneinander aufweist.

Die erfindungsgemäße optische Abtastvorrichtung mit den Merkmalen des Anspruchs 1 weist gegenüber den bekannten Lösungsansätzen den Vorteil auf, daß der Abtastkopf auch bei Vorhandensein von Vibrationen sicher und spielfrei geführt und somit die Widerstandsfähigkeit gegenüber Erschütterungen erhöht wird. Eine Anwendung der Erfindung erlaubt es, die Vibrationsempfindlichkeit optischer Datenlesegeräte zu reduzieren. Eine Schwachstelle vieler auf dem Markt befindlicher Abtastvorrichtungen wird hiermit beseitigt und die Auswahl an in Frage kommenden Typen für vibrationsrelevante Anwendungen erhöht.

Die erfindungsgemäße Abtastvorrichtung stellt die wirtschaftlichste Lösung des oben geschilderten Problems dar, da lediglich geringfügige gestalterische Modifikationen an in der Regel bereits bestehenden Bauteilen vorzunehmen sind.

In den Unteransprüchen finden sich vorteilhafte Weiterbildungen und Verbesserungen der in Anspruch 1 angegebenen optischen Abtastvorrichtung.

Gemäß einer bevorzugten Weiterbildung weist der Abtastkopf ein Objektiv zum Fokussieren eines Lichtstrahls auf den Aufzeichnungsträger auf.

Gemäß einer weiteren bevorzugten Weiterbildung ist die Führungseinrichtung als Welle mit spiralförmigen Nuten ausgebildet und durch einen Motor, insbesondere einen Elektromotor, antreibbar. Der Motor dient einer Drehbewegung der Welle, die in eine Linearbewegung des Abtastkopfes umgewandelt wird.

Gemäß einer weiteren bevorzugten Weiterbildung besteht die Lagereinrichtung aus einer Lagerschale zur Aufnahme der Führungseinrichtung und aus einem elastischen, an den Abtastkopf gekoppelten Mutterelement. Durch die Elastizität des Mutterelements ist die Aufbringung einer Kraft mit vorbestimmter Größe und Richtung auf die Führungseinrichtung möglich.

Gemäß einer weiteren bevorzugten Weiterbildung weist das Mutterelement mehrere Zähne auf, die in die Nuten der Führungseinrichtung zum Umwandeln der Drehbewegung der Führungseinrichtung in eine Linearbewegung des Abtastkopfes eingreifen. Die Maße der Nuten und der entsprechenden Zähne sind derart aufeinander abgestimmt, daß eine gute Führung gewährleistet ist. Damit ist eine Bewegung des Abtastkopfes auf der vorbestimmten radialen Bahn mittels dem Motor steuerbar.

Gemäß einer weiteren bevorzugten Weiterbildung ist die Vorspanneinrichtung als Federelement, insbesondere als Blattfeder, ausgebildet, das am elastischen Mutterelement derart anbringbar ist, daß die mehreren Zähne mit einer statischen Vorspannkraft vorbestimmter Größe und Richtung an die Führungseinrichtung andrückbar sing. Dadurch wird das Spiel zwischen der Führungseinrichtung und der Lagereinrichtung eliminiert.

Das Mutterelement mit den daran angebrachten Zähnen übernimmt somit neben der Funktion einer radialen Führung noch die Funktion einer Passungstoleranzelimination der entsprechenden Bauteile. Dadurch wird der Abtastkopf auch bei Vibrationen höherer Frequenzen starr gehalten, indem die Größe und Richtung der Vorspannkraft entsprechend der Stärke und Richtung der auftretenden Beschleunigung vorab bestimmt wird.

Gemäß einer weiteren bevorzugten Weiterbildung ist die Vorspanneinrichtung als zusätzliches Federelement ausgebildet, das in der mindestens einen mit dem Abtastkopf verbundenen Lagereinrichtung zum Aufbringen einer statischen Vorspannkraft vorbestimmter Größe und Richtung auf die mindestens eine Führungseinrichtung zum Verspannen derselben und der Lagereinrichtung gegeneinander angebracht ist. Dieses bietet den Vorteil, daß in konventionellen Laufwerken lediglich eine geringfügige Modifikation an bereits bestehenden Teilen für eine verbesserte Widerstandsfähigkeit gegenüber Erschütterungen vorzunehmen ist. Somit ist diese Art der Toleranzpassungselimination eine kostengünstige Lösung.

Gemäß einer weiteren bevorzugten Weiterbildung ist der Aufzeichnungsträger z.B. als Compact-Disc (CD), Digitale-Video-Disc (DVD), Minidisc (MD) oder als magnetooptische Disc (MOD) ausgebildet. Da die Mechaniken verwandter Speichermedien nach dem gleichen Prinzip arbeiten, nämlich ein rotierendes Medium und einen linear verstellbaren Abtastkopf aufweisen, ist die Erfindung auch auf sämtliche derart funktionierenden Aufzeichnungsträger anwendbar.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine perspektivische Ansicht eines Mutterelements und eines Federelements gemäß einer ersten Ausführungsform der vorliegenden Erfindung;
- Fig. 2: eine Draufsicht auf das Mutterelement mitsamt Federelement im eingebauten Zustand gemäß dem ersten Ausführungsbeispiel der vorliegenden Erfindung;
- Fig. 3: eine Querschnittansicht entlang der Linie H-H aus Fig. 2;
- Fig. 4: eine Draufsicht auf ein Federelement im eingebauten Zustand gemäß einem zweiten Ausführungsbeispiel der vorliegenden Erfindung;
- Fig. 5a: eine Draufsicht auf eine optische Abtastvorrichtung;
- Fig. 5b: eine vergrößerte Ansicht'des in Fig. 5a gekennzeichneten Teils A der optischen Abtastvorrichtung; und
- Fig. 6: ein Diagramm der Schwingungsverläufe' des Abtastkopfes und des gesamten Datenaufzeichnungsgerätes bei Beschleunigungsvorgängen im Falle eines Vorhandenseins von Passungstoleranzen.

### BESCHREIBUNG DER AUSFÜHRUNGSBEISPIELE

In den Figuren bezeichnen gleiche Bezugszeichen gleiche oder funktionsgleiche Komponenten.

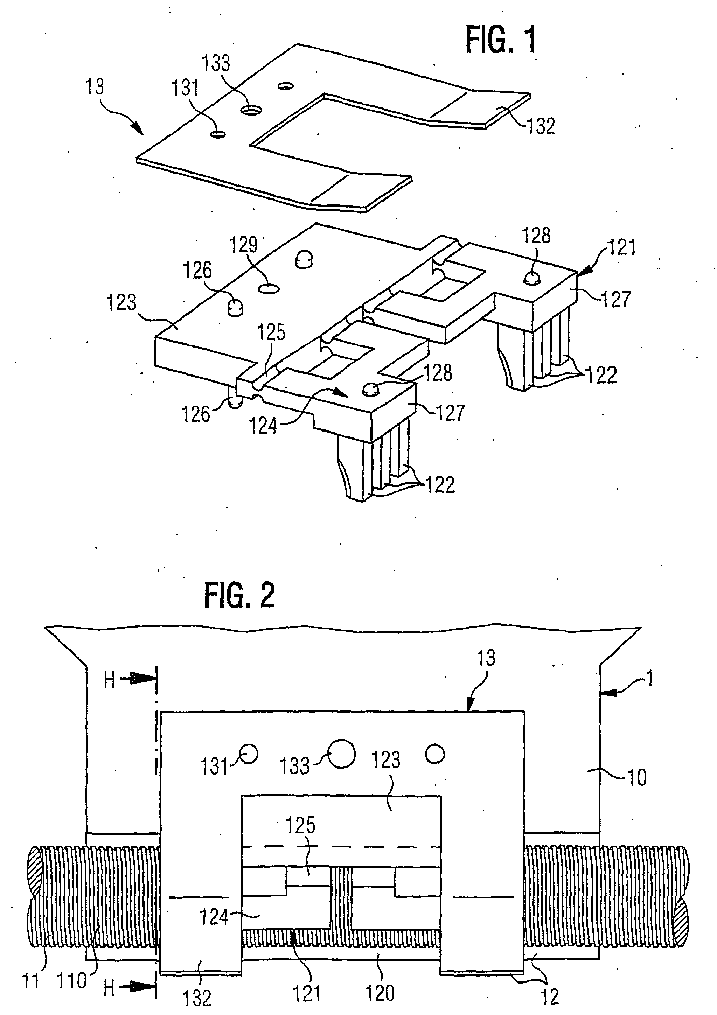

Fig. 1 illustriert eine perspektivische Ansicht eines elastischen Mutterelements 121, das als ein Teil einer Lagereinrichtung 12 zur Aufnahme einer in Fig. 2 dargestellten Führungseinrichtung 11 ausgebildet ist, und eine entsprechend ausgebildete Vorpsanneinrichtung 13 in Form einer Blattfeder 13 gemäß einem ersten Ausführungsbeispiel der vorliegenden Erfindung.

Das Mutterelement 121 besteht aus einem Hinterabschnitt 123, der an dem Abtastkopf 10 fest anbringbar ist, und einem Vorderabschnitt 124, der elastisch mit dem Hinterabschnitt 123 verbunden ist, wobei die Verbindungsstelle 125 zwischen dem Hinterabschnitt 123 und dem Vorderabschnitt 124 sowohl auf der Ober- als auch auf der Unterseite kanalförmig ausgebildet ist und somit als Scharnier für eine elastische Bewegung dient. Aufgrund der Materialaussparung an der Verbindungsstelle 125 ist die Steifigkeit dort gegenüber dem Hinter- und Vorderabschnitt verringert, und bei einer Krafteinwirkung auf den Vorderabschnitt 124 dient die Verbindungsstelle 125 als Scharnier.

Ferner sind am Hinterabschnitt 123 ein Durchgangsloch 29 und sowohl an der Oberseite als auch an der Unterseite Stifte 126 angebracht.

Der Vorderabschnitt 124 weist zwei Arme 127 auf, die jeweils an ihrer Unterseite mehrere Zähne 122 und an ihrer Oberseite jeweils eine Kontaktstelle 128 aufweisen.

Die in Fig. 1 ebenfalls dargestellte, als Blattfeder 13 ausgebildete Vorspanneinrichtung 13 besitzt zwei symmetrische Löcher 131, die zur Aufnahme der Stifte 126 auf der Oberseite des Hinterabschnitts 123 des Mutterelements 121 eine entsprechende Form annehmen, und ein zwischen den beiden Löchern 131 angeordnetes Loch 133, das entsprechend dem Durchgangsloch 129 ausgebildet ist. Mittels zusätzlicher Befestigungselemente, die hier nicht dargestellt sind, kann somit die Blattfeder 13 auf dem Mutterelement, und dieses wiederum auf dem Abtastkopf 10 befestigt werden.

Die Blattfeder 13 ist u-förmig ausgestaltet, wobei ihre beiden Enden 132 mittels Knickstellen in beiden Schenkeln etwas nach oben aufgebogen sind.

Fig. 2 illustriert das Mutterelement 121 gemäß dem ersten Ausführungsbeispiel der vorliegenden Erfindung im auf dem Abtastkopf 10 eingebauten Zustand.

Das Mutterelement 121 mitsamt der Blattfeder 13 wird mittels einer Schraube, die in die sich überlappenden Löcher 129 und 133 des Hinterabschnitts bzw. der Blattfeder einsetzbar ist, befestigt.

Mit dem Abtastkopf 10 ist eine Lagerschale 120 verbunden, die zusammen mit dem Mutterelement 121 für die gesamte Lagereinrichtung 12 zur Lagerung der Führungseinrichtung 11 bilden, wobei die Führungseinrichtung in diesem Ausführungsbeispiel in Form einer Spindelwelle 11 mit spiralförmigen Nuten 110 ausgebildet ist.

Die Spindelwelle 11 wird durch einen nicht dargestellten Elektromotor zu Drehbewegungen angetrieben und liegt in der Lagerschale 120 des Abtastkopfes 10.

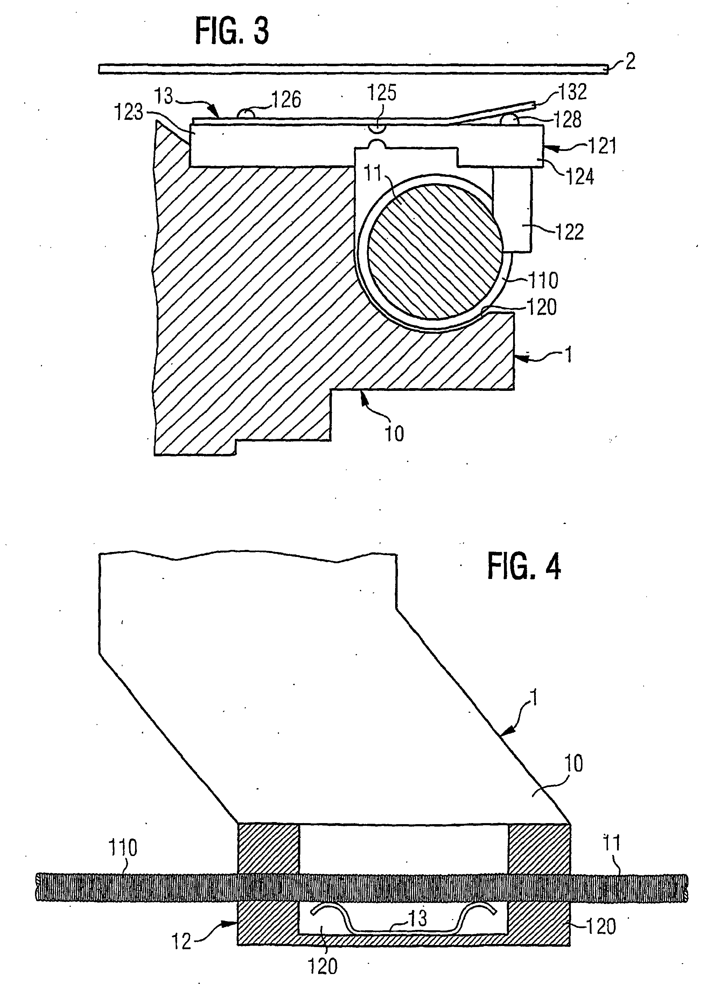

In Fig. 3 ist ein Querschnitt entlang der Linie H-H aus Fig. 2 dargestellt, wobei zur Ergänzung oberhalb der Anordnung für ein besseres Verständnis ein Teil des Aufzeichnungsträgers 2 abgebildet ist.

In dieser Schnittansicht ist das Prinzip und die Funktionsweise des ersten Ausführungsbeispiels der vorliegenden Erfindung verdeutlicht.

Die Spindelwelle 11 befindet sich in der Lagerschale 120 des Abtastkopfes 10. Die Zähne 122 sind derart ausgebildet, daß sie in Kontakt mit den Zahnflanken der Nuten 110 der Spindelwelle 11 stehen und dadurch die Drehbewegung der Spindelwelle 11 in eine Linearbewegung des Abtastkopfes entlang der radialen Bahn umwandeln.

Jedoch besteht ohne Vorspanneinrichtung 13 wie in Fig. 5a erkennbar ein Spalt 4 zwischen den Zähnen 122 und der Spindeloberfläche, da beide Bauteile Toleranzbehaftet sind. Auch die Lagerschale 120 besitzt eine Passungstoleranz.

Beim Einbau eines entsprechenden Gerätes in z.B. ein Kraftfahrzeug ist dieses bestimmten Beschleunigungen ausgesetzt, aufgrund derer das Gerät Vibrationen erleidet. Beschleunigungen in Richtung der Ebene des Aufzeichnungsträgers 2, die parallel zur Verfahrrichtung des Abtastkopfes 10 angreifen, sind besonders kritisch hinsichtlich Vibrationen und somit für eine Datenleseunterbrechung.

Deshalb ist die auf die Spindelwelle 11 wirkende Vorspannkraft mittels der Vorspanneinrichtung 13 einerseits bezüglich einer bestimmten Richtung, nämlich in der Ebene der auftretenden Beschleunigung, und andererseits bezüglich der durch die Beschleunigung auftretenden Kraft mit entsprechender Richtung und Größe vorab zu bestimmen. Die erforderliche Federkraftstärke der Blattfeder 13 in der Richtung, die für ein Verspannen der beteiligten Bauteile besonders günstig bezüglich der auftretenden Beschleunigung ist, wird unter Berücksichtigung spezifischer Baugrößen wie z. B. Masse und Schwerpunktlage der Abtastvorrichtung und der auf die Vorrichtung wirkenden Beschleunigungskraft im speziellen Anwendungsfall vorab bestimmt. Dementsprechend wird das Federelement 13 passend ausgewählt und eingebaut.

Damit das Mutterelement 121 neben der Funktion der Umwandlung der Drehbewegung der Spindelwelle 11 in eine geradlinige Bewegung des Abtastkopfes 10 zusätzlich eine Vorspannkraft auf die Spindelwelle 11 ausüben kann, ist auf dem Mutterelement 121 die Blattfeder 13 derart aufgebracht, daß die Federkraft, die auf die Kontaktstelle 128 des Mutterelements 121 wirkt, durch den Hebel an der Verbindungsstelle 125 des Mutterelements 121 eine Kraft auf die Spindelwelle 11 ausübt und diese an mindestens zwei Stellen gegen die Lagerschalenwand drückt. Diese Vorspannkraft ist durch eine entsprechende Ausgestaltung des Vorderabschnitts 124 des Mutterelements 121 derart umlenkbar, daß eine genügend große Kraftkomponente in der Medienebene wirksam ist.

Im Kraftfahrzeugbereich treten Beschleunigungen in der Medienebene bis maximal 5g auf. Daraus kann die bei Beschleunigungsvorgängen auf die Spindelwelle 11 wirksame Kraft berechnet werden. Demnach ist das Federelement 13 so zuwählen, daß dieses eine über die Zähne 122 übertragene Vorspannkraft auf die Spindelwelle 11 mit einer genügend großen Kraftkomponente in Medienebene senkrecht zur Spindelachse ausübt und damit die Spindelwelle 11 gegen die Lagerschale 120 auch bei Auftreten der maximalen Beschleunigungskraft verspannt.

Ebenso kann durch spezielle Ausgestaltung der Anordnung der Winkel der Vorspannkraft bezüglich der Medienebene gewählt werden. Da allerdings wie oben erwähnt Beschleunigungen in Richtung der Medienebene parallel zur Verfahrrichtung des Abtastkopfes 10 besonders kritisch sind, ist der Winkel für eine möglichst große Vorspannkraft bezüglich dieser Richtung so gering wie möglich zu wählen.

Um eine Verkippung des Abtastkopfes 10 bezogen auf die Spindelwelle 11 zu verhindern, ist es notwendig, mindestens an zwei Stellen, die in einem vorbestimmten Abstand beabstandet sind, zur Verhinderung eines Drehmomentes eine entsprechende Vorspannkraft auf die Spindelwelle 11 mittels den beiden Armen 127 des Vorderabschnitts 124 auszuüben. Dadurch ist gewährleistet, daß die Spindel an die den Zähnen 122 gegenüberliegende Wand der Lagerschale 120 an mindestens zwei verschiedenen Stellen gedrückt ist. Somit kommt es selbst bei Vorhandensein von Vibrationen in einem höheren Frequenzbereich zu keiner Verkippung bzw. Drehung des Abtastkopfes 10.

Fig. 4 illustriert ein zweites Ausführungsbeispiel der vorliegenden Erfindung.

In diesem Ausführungsbeispiel wird die Blattfeder 13 aus dem ersten Ausführungsbeispiel durch ein zusätzliches Federelement 13 ersetzt.

Das Federelement 13 ist beispielsweise in der mit dem Abtastkopf 10 verbundenen Lagereinrichtung 12 bzw. in der Lagerschale 120 eingesetzt, wobei das Federelement 13 an einer der Spindelwelle 11 gegenüberliegenden Wand parallel zur Medienebene angebracht ist und an zwei benachbarten Stellen an der Spindelwelle 11 angreift.

Es ist wiederum ein solches Federelement 13 zu wählen, deren Federkraft ausreicht, um den im Fahrbetrieb auftretenden Beschleunigungskräften entgegenzuwirken und eine permanente Verspannung der Spindelwelle 11 und des Abtastkopfes 10 bzw. der Lagerschale 120 gegeneinander zu schaffen.

Dadurch wird der Abtastkopf auch bei Vibration sicher und spielfrei lediglich durch eine geringfügige Modifikation an den bereits bestehenden Teilen geführt. Somit beseitigt die vorliegende Erfindung einen notorischen Schwachpunkt oben genannter Laufwerke und stellt die wirtschaftlichste Lösung zur Realisierung dämpferloser Laufwerke dar.

Bei Anwendung in konventionellen Laufwerken wird eine deutliche Verbesserung, in günstigen Fällen sogar um den Faktor 2 bis 3, der Vibrationsperformance insbesondere bei vertikaler Installationsrichtung erreicht. Der zu erwartende Vorteil ist so groß, daß selbst unter Berücksichtigung des Änderungsaufwands eine Einsetzung auch in bestehenden Produkten lohnenswert ist.

## Patentansprüche

1. Optische Abtastvorrichtung (1) zum Lesen von auf einem rotierenden Aufzeichnungsträger (2) gespeicherten Daten mit:
einem Abtastkopf (10);
mindestens einer Führungseinrichtung (11) zum Führen des Abtastkopfes (10) entlang einer vorbestimmten Bahn;
mindestens einer mit dem Abtastkopf (10) verbundenen Lagereinrichtung (12) zum Lagern des Abtastkopfes auf der mindestens' einen Führungseinrichtung (11) ; und
mit mindestens einer elastischen vorspanneinrichtung (13) zum Aufbringen einer statischen Vorlast auf die mindestens eine Führungseinrichtung (11) zum Verspannen derselben und der mindestens einen mit dem Abtastkopf (10) verbundenen Lagereinrichtung (12) gegeneinander, **dadurch gekennzeichnet, dass** die Vorspannkraft unter einem Winkel zur Medienebene wirkt, so dass die Vorspannkraft sowohl senkrecht als auch parallel zur Medienebene wirkt.

2. Vorrichtung nach Anspruch 1, **dadurch gekennzeichnet, dass** der Abtastkopf (10) ein objektiv (101) zum Fokussieren eines Lichtstrahls auf den Aufzeichnungsträger (2) aufweist.

3. Vorrichtung nach einem der Ansprüche 1 oder 2, **dadurch gekennzeichnet, dass** die Führungseinrichtung (11) als Welle (11) mit spiralförmigen Nuten (110) ausgebildet ist.

4. Vorrichtung nach einem der vorhergehenden Ansprüche, **dadurch gekennzeichnet, dass** die Führungseinrichtung (11) durch einen Motor antreibbar ist.

5. Vorrichtung nach einem der vorhergehenden Ansprüche, **dadurch gekennzeichnet, dass** die Lagereinrichtung (12) aus einer Lagerschale (120) zur Aufnahme der Führungseinrichtung (11) und einem elastischen, an den Abtastkopf (10) gekoppelten Mutterelement (121) besteht.

6. Vorrichtung nach Anspruch 5, **dadurch gekennzeichnet, dass** das Mutterelement (121) mehrere Zähne (122) aufweist, die in die Nuten (110) der Führungseinrichtung (11) zum Umwandeln der Drehbewegung der Führurrgseinrichtung (11) in eine Linearbewegung des Abtastkopfes (10) eingreifen.

7. Vorrichtung nach Anspruch 6, **dadurch gekennzeichnet, dass** die Vorspanneinrichtung (13) als Federelement (13), insbesondere Blattfeder, ausgebildet ist, das am elastischen Mutterelement (121) derart anbringbar ist, dass die mehreren Zähne (122) mit einer statischen Vorspannkraft vorbestimmter Größe und Richtung an die Führungseinrichtung (11) andrückbar sind.

8. Vorrichtung nach einem der vorhergehenden Ansprüche, **dadurch gekennzeichnet, dass** die Vorspanneinrichtung (13) als zusätzliches Federelement (13) ausgebildet ist, das in der mindestens einen mit einem Abtastkopf (10) verbundenen Lagereinrichtung (12) zum Aufbringen einer statischen Vorspannkraft vorbestimmter Größe und Richtung auf die mindestens eine Führungsrichtung (11) zum Verspannen derselben und der Lagereinrichtung (12) gegeneinander angebracht ist.

9. Vorrichtung nach einem der vorhergehenden Ansprüche, **dadurch gekennzeichnet, dass** der Aufzeichnungsträger (2) als Compact Disc (CD), Digitale Video Disc (DVD), Mini Disc (MD) oder als Magnetooptische Disc (MOD) ausgebildet ist.

## Claims

1. Optical scanning device (1) for reading data stored on a rotating recording carrier (2) with:
a scanning head (10);
at least one guiding device (11) for guiding the scanning head (10) along a predetermined path;
at least one bearing device (12), connected to the scanning head (10), for bearing the scanning head on the at least one guiding device (11); and
with at least one flexible prestressing device (13) for applying a static initial load to the at least one guiding device (11) for bracing the same and the at least one bearing device (12), connected to the scanning head (10), against each other, **characterized in that** the prestressing force acts at an angle to the plane of the medium, so that the prestressing force acts both perpendicularly and parallel to the plane of the medium.

2. Device according to Claim 1, **characterized in that** the scanning head (10) has a lens (101) for focusing a light beam onto the recording carrier (2).

3. Device according to either of Claims 1 and 2, **characterized in that** the guiding device (11) is formed as a shaft (11) with spiral grooves (110).

4. Device according to one of the preceding claims, **characterized in that** the guiding device (11) can be driven by a motor.

5. Device according to one of the preceding claims, **characterized in that** the bearing device (12) comprises a bearing shell (120) for receiving the guiding device (11) and a flexible nut element (121), coupled to the scanning head (10).

6. Device according to Claim 5, **characterized in that** the nut element (121) has a number of teeth (122), which engage in the grooves (110) of the guiding device (11) for converting the rotating movement of the guiding device (11) into a linear movement of the scanning head (10).

7. Device according to Claim 6, **characterized in that** the prestressing device (13) is formed as a spring element (13), in particular a leaf spring, which can be applied to the flexible nut element (121) in such a way that the number of teeth (122) can be pressed with a static prestressing force of a predetermined magnitude and direction against the guiding device (11).

8. Device according to one of the preceding claims, **characterized in that** the prestressing device (13) is formed as an additional spring element (13), which is fitted in the at least one bearing device (12), connected to a scanning head (10), for applying a static prestressing force of a predetermined magnitude and direction to the at least one guiding device (11) for bracing the same and the bearing device (12) against each other.

9. Device according to one of the preceding claims, **characterized in that** the recording carrier (2) is formed as a compact disc (CD), digital video disc (DVD), mini disc (MD) or as a magnetooptical disc (MOD).

## Revendications

1. Dispositif de balayage optique (1) pour lire des données enregistrées sur un support d'enregistrement (2) en rotation, comprenant :
une tête de lecture (10) ;
au moins un dispositif de guidage (11) pour guider la tête de lecture (10) le long d'une piste prédéterminée ;
au moins un dispositif d'appui (12) relié à la tête de lecture (10) pour supporter la tête de lecture sur un dispositif de guidage (11) ; et
au moins un dispositif de précontrainte (13) élastique pour introduire une pré-charge statique sur un dispositif de guidage (11) pour pré-contraindre ensemble celui-ci et un dispositif d'appui (12) relié à la tête de lecture (10), **caractérisé en ce que** la force de précontrainte agit sous un angle tel par rapport au plan moyen, que la force de précontrainte agit aussi bien perpendiculairement que parallèlement par rapport au plan moyen.

2. Dispositif selon la revendication 1,
**caractérisé en ce que**
la tête de lecture (10) présente un objectif (101) pour focaliser un rayon de lumière sur le support d'enregistrement (2).

3. Dispositif selon l'une des revendications 1 ou 2,
**caractérisé en ce que**
le dispositif de guidage (11) est configuré comme un corps ondulé (11) avec des rainures spiralées (110).

4. Dispositif selon l'une des revendications précédentes,
**caractérisé en ce que**
le dispositif de guidage (11) est mis en fonctionnement par un moteur.

5. Dispositif selon l'une des revendications précédentes,
**caractérisé en ce que**
le dispositif d'appui (12) comprend un coussinet de réception (120) du dispositif de guidage (11) et un élément d'écrou élastique (121) raccordé à la tête de lecture (10).

6. Dispositif selon la revendication 5,
**caractérisé en ce que**
l'élément d'écrou (121) présente plusieurs dents (122) qui s'engrènent dans les rainures (110) du dispositif de guidage (11) pour convertir le mouvement rotatif du dispositif de guidage (11) en un mouvement linéaire de la tête de lecture (10).

7. Dispositif selon la revendication 6,
**caractérisé en ce que**
le dispositif de précontrainte (13) est configuré comme un élément ressort (13), particulièrement un ressort à lames qui est applicable sur l'élément d'écrou élastique (121) de telle sorte que plusieurs dents (122) sont comprimables avec une force de précontrainte statique de grandeur prédéterminée en direction du dispositif de guidage (11).

8. Dispositif selon l'une des revendications précédentes,
**caractérisé en ce que**
le dispositif de précontrainte (13) est configuré comme un élément ressort complémentaire (13) qui est disposé dans un dispositif d'appui (12) relié à la tête de lecture (10) pour introduire une force de précontrainte statique de grandeur prédéterminée et en direction du dispositif de guidage (11) pour pré-contraindre ensemble celui-ci et le dispositif d'appui (12).

9. Dispositif selon l'une des revendications précédentes,
**caractérisé en ce que**
le support d'enregistrement (2) est configuré comme un disque-compact (CD), un disque vidéo-numérique (DVD), un mini-disque (MD) ou un disque magnéto-optique (MOD).
